# EUROPÄISCHE PATENTSCHRIFT

(11) **EP 4 584 647 B1**
(45) Veröffentlichungstag und Bekanntmachung des Hinweises auf die Patenterteilung: **07.10.2026**
(21) Anmeldenummer: 23733663.1
(22) Anmeldetag: 13.06.2023
(51) Int. Cl.: G05B 19/048

(54) **VERFAHREN UND STEUERUNGSEINHEIT ZUR STEUERUNG VON PROZESSEN BEI DER HANDHABUNG VON ARTIKELN**
METHOD AND CONTROL UNIT FOR CONTROLLING PROCESSES WHEN HANDLING ARTICLES
PROCÉDÉ ET UNITÉ DE COMMANDE POUR COMMANDER DES PROCESSUS LORS DE LA MANIPULATION D'ARTICLES

(30) Priorität: 06.09.2022 DE 102022122555
(43) Veröffentlichungstag der Anmeldung: 16.07.2025
(73) Patentinhaber: Krones Aktiengesellschaft, 93073 Neutraubling (DE)
(72) Erfinder: BIEN, Marcel, 93073 Neutraubling (DE); DENNEMARCK, Peter, 93073 Neutraubling (DE); SCHNITZER, Florian, 93073 Neutraubling (DE)
(74) Vertreter: Benninger, Johannes
(86) Internationale Anmeldenummer: PCT/EP2023/065795
(87) Internationale Veröffentlichungsnummer: WO 2024/051977

(56) Entgegenhaltungen:
- DE-A1- 4 447 288
- US-A1- 2014 012 490
- US-B1- 9 817 383

## Beschreibung

Die vorliegende Erfindung betrifft ein Verfahren zur Steuerung von Prozessen bei der Handhabung von Artikeln, insbesondere im Zusammenhang mit der Behebung von aufgetretenen Störungen im Prozessablauf durch Auswahl von Szenarien zur Fehlerbehebung. Zudem betrifft die Erfindung eine Steuerungseinheit, die dafür vorgesehen und ausgestattet ist, Prozesse im Zusammenhang mit der Handhabung von Artikeln zu steuern.

In Behälterbehandlungsanlagen werden die abzufüllenden Behälter, die normalerweise mit Getränken oder anderen Flüssigkeiten befüllt werden, vielfältigen Transport- und Behandlungsschritten unterzogen. Beginnend von der jeweils gewählten Ausgangssituation, bei der die Behälter gebrauchsfertig zur Verfügung gestellt oder erst aus Vorformlingen mittels Blasformmaschinen in ihre vorgesehene Gestalt gebracht werden, werden sie auf ihrem Transportweg befüllt, etikettiert und nach Gruppierungsvorgängen verpackt. Die Verpackung mehrerer befüllter Behälter kann bspw. mittels Schrumpffolien, Verpackungszuschnitten und/oder mittels Umverpackungen aus Papier oder Karton erfolgen. Die solchermaßen gebildeten Verpackungseinheiten können ggf. anschließend palettiert und in Palettenlagen gestapelt werden, um sie zu großen Einheiten versandfertig und transportabel zu machen.

Innerhalb derartiger Behälterbehandlungs- oder Getränkeabfüllanlagen, die in aller Regel als integrierte Anlagen ausgebildet sind und deshalb auch unterschiedliche Verpackungsmodule umfassen, erfolgt der Behältertransport oftmals im sog. Gassenzulauf zu einer Verpackungsmaschine, wobei die Positionen von zahlreichen transportierten Behältern herkömmlicherweise sensorisch erfasst werden. Auch die Verpackungsmaschinen sind mit den nachfolgenden Palettieranlagen über Transportstrecken verbunden, in denen die Behälter wiederum sensorisch begleitet und somit die gesamten Transportstrecken sensorisch überwacht werden können.

Eine Transportvorrichtung und ein Verfahren zur Beförderung und zur Verteilung von Getränkebehältern, welche in mehreren parallelen Fördergassen transportiert werden, findet sich bspw. in der DE 10 2020 120 336 A1 beschrieben. Als Option findet sich dort zudem die sensorische Erfassung des Behälterstroms sowie bedarfsweise die roboterunterstützte Beeinflussung des Behälterstroms.

Wird durch die sensorische Erfassung auf einem der Transportstrecken eine Fehlpositionierung eines Behälters detektiert, beispielsweise ein umgekippter Behälter oder ein durch andere Gründe verursachter Verbleib eines Behälters in einer der Gassen, so wird normalerweise eine Fehlermeldung generiert, die zu einem Maschinenstopp führt, damit der Fehler behoben werden und nicht zu weiteren Folgeproblemen führen kann. Das Anhalten der Maschinen ist insbesondere deshalb sinnvoll, um den aufgetretenen und bspw. mittels sensorischer Erfassung festgestellten Anlagenfehler vor der Wiederaufnahme der weiteren Produktion vollständig beheben zu können.

Je nach Maschinenausstattung kann es im Einzelfall darüber hinaus möglich sein, manche der aufgetretenen Fehler zu erkennen und einen einzelnen Behälter, der als fehlerverursachender Behälter identifiziert werden konnte, mittels eines hierfür ausgestatteten Greifroboters aus dem Behälterstrom zu entfernen. Abgesehen davon, dass derartige automatisiert arbeitende Fehlerbeseitigungsroboter hohe Kosten verursachen und meist nicht an allen potentiellen Fehlerstellen installiert werden können, sind sie meist nicht in der Lage, auf alle möglicherweise vorkommenden Fehlerereignisse gleichermaßen zu reagieren, um die Fehler zu beseitigen.

Aus diesem Grund kann in aller Regel auf die zusätzliche Bereitschaft zu manuellen Eingriffen für eine Beseitigung aller denkbaren Fehler nicht verzichtet werden. Außerdem kann ein manuelles Eingreifen in solchen Fällen sinnvoll oder notwendig sein, wenn eine automatisierte Anlagensteuerung nicht in der Lage ist, eine für die Behebung eines jeweils aufgetretenen Fehlers optimale Entscheidung zu treffen, sondern stattdessen eine sinnvolle Benutzereingabe erwartet.

Schließlich kann ein weiteres Problem darin gesehen werden, dass solche automatisiert arbeitenden Fehlerbeseitigungseinrichtungen oftmals nicht zwischen unterschiedlichen fehlerverursachenden Ereignissen und deren sich im Zeitablauf veränderndem oder einem im Zeitablauf variierendem Auftreten unterscheiden können. So können manche der entstehenden Förderprobleme auf allmählichen Verschleiß in den Fördereinrichtungen zurückzuführen sein, während andere Fehler durch Fehleinstellungen zustande kommen können, mithin auf menschliche Gründe zurückzuführen sind. Somit steht auch nicht für alle diese genannten Fehlervarianten jeweils ein optimales Fehlerbeseitigungsprogramm zur Verfügung, das in automatisierter Anlagensteuerung zu den jeweils optimalen Ergebnissen führt.

Aus der Druckschrift DE 44 47 288 A ist zur Störungsbehebung bekannt, eine mittels einer Prozesssteuerungszentrale vorgebbare Prozessmodifikation zur zumindest teilweisen Behebung der Störung aus einer Auswahl von mindestens zwei Alternativen zur Prozessmodifikation vorzusehen. Diese werden dem Personal angeboten.

Für eine Steuerungseinrichtung, die unterschiedliche Sensordaten oder andere anlagenspezifische Signaldaten zu verarbeiten hat und deren Steuersignale einen Roboter zur Fehlerbeseitigung möglichst effektiv ansteuern sollen, ist es in aller Regel schwierig, für derart unterschiedliche Fehlerursachen, wie sie hier beispielhaft genannt sind, die jeweils richtigen Steuerbefehle zu geben. Dies hat zur Folge, dass in manchen der denkbaren Situationen ein Maschinenstopp mit anschließender Fehlersuche und manueller Fehlerbeseitigung gegenüber einem störungsbehafteten Weiterbetrieb der Anlage die bessere Entscheidung sein kann.

Angesichts der im solchen Situationen typischerweise auftretenden Fehlerkategorien kann es als vorrangiges Ziel der vorliegenden Erfindung betrachtet werden, den Betreibern solcher Anlagen zur Produktion, Abfüllung, Handhabung, Verpackung und/oder Förderung von Behältern mit darin aufgenommenen flüssigen oder pastösen Produkten eine verbesserte Verarbeitung und/oder Klassifizierung von auftretenden Fehlermeldungen zu ermöglichen, um solchermaßen nicht nur die Anzahl an kritischen Fehlermeldungen zu reduzieren, sondern im günstigsten Fall auch die Handhabung, die Prozesssteuerung und den Produktionsablauf der kompletten Anlage verbessern und optimieren zu können.

Dieses identifizierte Ziel wird mit den Gegenständen der unabhängigen Ansprüche erreicht. Merkmale vorteilhafter Weiterbildungen der Erfindung finden sich in den jeweiligen abhängigen Ansprüchen.

Zur Erreichung zumindest von Teilen des oben genannten Ziels schlägt die vorliegende Erfindung ein Verfahren zur Steuerung von Prozessen bei der Handhabung von Artikeln mit den Merkmalen des unabhängigen Verfahrensanspruchs vor. Bei den in den Prozessen gehandhabten Artikeln kann es sich insbesondere um Behälter oder Behältergruppen mit jeweils darin eingefüllten und somit darin transportierten flüssigen oder pastösen Inhaltsstoffen handeln, wobei es sich bei den Inhaltsstoffen wiederum vorrangig um Getränke handeln kann, wahlweise jedoch auch um andere Flüssigkeiten oder pastöse Produkte, um Lebensmittel, um Kosmetika o. dgl. mehr.

Wenn im vorliegenden Zusammenhang verallgemeinernd von Prozessen zur Handhabung von Artikeln die Rede ist, so können damit Produktionsprozesse, Handhabungs- oder Förderprozesse, Prozesse der Veränderung der Artikel oder der Inhaltsstoffe, Verpackungs- und/oder Palettierungsprozessen und dergleichen mehr gemeint sein. Veränderungsprozesse können etwa Etikettierungs- oder Bedruckungsvorgänge sein, während der Begriff der Handhabung von Artikeln nahezu jegliche Transport-, Umsetzungs-, Gruppierungs- oder Verpackungsvorgänge umfassen kann, so dass grundsätzlich die meisten Prozessvarianten schon genannt sind, auch wenn zudem noch konkreter von Förderungs-, Verpackungs- und/oder Palettierungsprozessen gesprochen werden kann.

Bei dem erfindungsgemäßen Verfahren wird wenigstens ein Prozessparameter ermittelt, der auf eine Störung zumindest von Teilen des Prozesses oder der Prozesse hinweist oder der eine Störung im Prozess oder zumindest innerhalb von Teilprozessen oder von Prozessabschnitten anzeigt, etwa in Form eines Störungsindikators. Der Prozessparameter selbst bildet in der Regel nicht die Störung selbst, sondern weist auf eine solche hin oder liefert ein deutlich erkennbares Indiz für das Vorliegen einer Störung. Der Prozessparameter kann oder mehrere Prozessparameter können bspw. auf sensorischem Wege ermittelt werden.

Solche Prozessparameter können jedoch auch aus Anlagensteuerungsteilen und deren Steuerungssignalen abgeleitet werden, wenn sich im Bereich der Signalverarbeitung der Anlagensteuerung oder der Prozesssteuerung bspw. Auffälligkeiten oder untypische Verläufe im Signalverlauf o. dgl. mehr zeigen. Alle diese genannten Beispiele können zur Gewinnung von Prozessparametern herangezogen werden, wie sie im Rahmen des vorliegenden Verfahrens verarbeitet und ausgewertet werden.

Da es als ein vorrangiges Ziel der Erfindung betrachtet wird, Störungen in Prozessen oder Anlagensteuerungen zu erkennen und nach Möglichkeit effektiv zu beseitigen oder zumindest größtenteils zu beheben, stehen in aller Regel unterschiedliche automatisiert ablaufende oder teilautomatisierte Fehlerbehebungsstrategien und unterschiedliche Szenarien zur Fehlerbehebung und zur weitgehend verzögerungsfreien Fehlerbehebung zur Verfügung, zwischen denen eine Auswahl getroffen werden kann. Sofern es sich um eine automatisierte oder teilautomatisierte Fehlererkennung und Fehlerbeseitigung handelt, müssen auch für das Treffen einer sinnvollen Auswahl zwischen mindestens zwei, ggf. auch zwischen mehreren alternativen Entscheidungsvarianten gewisse Regeln vorgegeben sein. Diese Regeln können bspw. den Grad der Fehlerbeseitigung, die minimale Verzögerungszeit bis zur weitgehend fehlerfreien Wiederaufnahme der zuvor ablaufenden Prozesse oder andere Kriterien berücksichtigen.

Das erfindungsgemäße Verfahren sieht deshalb vor, dass mittels einer Prozesssteuerungszentrale, die Teil einer Anlagensteuerung oder als Unterbaugruppe dort implementiert ist, zunächst mindestens eine vorgebbare Prozessmodifikation oder eine vorgebbare Prozessänderungsstrategie mit dem Ziel einer Behebung oder zumindest teilweisen Behebung der Störung aus einer Auswahl von mehreren angebotenen Alternativen zur Prozessmodifikation ausgewählt wird, ohne dass damit bereits zwingend die Implementierung der Prozessmodifikation verbunden ist. Diese vorläufig ausgewählte Prozessmodifikation bildet zunächst nur die Auswahlentscheidung der Prozesssteuerungszentrale ab, während ihre Umsetzung erst in den nächsten, sich daran anschließenden Implementierungsschritten erfolgt.

Wenn an dieser Stelle von mehreren angebotenen Alternativen zur Prozessmodifikation gesprochen wird, so sind damit mindestens zwei angebotenen Alternativen zur Prozessmodifikation gemeint, zwischen denen die Prozesssteuerungszentrale im hier beschriebenen ersten Steuerungs- und Entscheidungsschritt auszuwählen hat. Selbstverständlich ist dies nicht einschränkend zu verstehen, denn oben wurde mit der Erwähnung von mehreren Auswahlalternativen bereits angedeutet, dass es sich hierbei um drei, vier oder mehr Alternativen zur Prozessmodifikation handeln kann, zwischen denen die Prozesssteuerungszentrale unter Berücksichtigung nachfolgend zu diskutierender Auswahl- und Entscheidungskriterien zu wählen hat.

Als eine extreme Ausprägung einer solchen Entscheidung kommt durchaus auch ein Anlagenstopp in Frage, bei dem die Fehlerbeseitigung unter Umständen auch nur unter manueller Beihilfe einer Serviceperson erreicht werden kann.

Als Kriterien, die für das Treffen einer Auswahlentscheidung zwischen den mindestens zwei Alternativen zur Prozessmodifikationen herangezogen werden können, eignet sich insbesondere das zu berücksichtigende Kriterium der Reduzierung des Ausmaßes oder des messbaren Grades der zu behebenden Störung. Als weiteres Kriterium kann das zu minimierende Ausmaß an Zeitverlust zwischen Erkennung einer Störung und vollständiger Behebung der Störung mit gleichzeitiger maximal zu erreichender Prozessgeschwindigkeit herangezogen werden.

Weitere Entscheidungskriterien sind möglich und sinnvoll, wobei verschiedene dieser Kriterien gleichzeitig und ggf. mit unterschiedlicher Gewichtung für die von der Prozesssteuerungszentrale zu treffenden Auswahl herangezogen werden können, um zu sinnvollen Ergebnissen zu gelangen die Auswirkungen von aufgetretenen und erkannten Störungen möglichst gering werden zu lassen.

Das erfindungsgemäße Verfahren sieht als weiteres Verfahrensmerkmal zudem vor, dass in zeitlicher Abfolge des Prozesses oder der Prozesse jeder einzelne störungsanzeigende Prozessparameter sowie die jeweils von der Prozesssteuerungszentrale ausgewählten und ausgeführten Prozessmodifikationen zur Behebung oder teilweisen Behebung der Störung erfasst und gespeichert werden, was im Zusammenhang mit einer akuten Fehlerbehebungsstrategie als auch im Zusammenhang mit zukünftigen Entscheidungen zur Fehlerbehebung sinnvoll genutzt werden kann.

Die Prozesssteuerungszentrale berücksichtigt außerdem bei jeder auftretenden und zu behebenden Störung mindestens ein zusätzliches Kriterium zur Reduzierung des Ausmaßes oder des messbaren Grades der zu behebenden Störung berücksichtigen. Ein solches zusätzliches Kriterium kann insbesondere in einer manuellen Benutzervorgabe liegen, die durch Änderung oder Bestätigung der von der Prozesssteuerungszentrale vorgenommenen Auswahl zwischen den mindestens zwei angebotenen Alternativen zur Prozessmodifikation diese Fehlerbehebungsstrategien in einer Weise modifizieren kann, dass damit die Benutzervorgabe bspw. die von der Prozesssteuerungszentrale vorgegebene Strategie übersteuern und verändern oder diese wahlweise auch bestätigen oder ggf. nur leicht modifizieren kann.

Darüber hinaus ändert jegliche von der Prozesssteuerungszentrale erfasste und verarbeitete Benutzervorgabe die Gewichtung bei zukünftigen Auswahlentscheidungen zwischen den mindestens zwei angebotenen Alternativen zur Prozessmodifikation dahingehend, dass zukünftige Auswahlentscheidungen einer zuvor erfolgten Benutzervorgabe angenähert werden. Dieser weitere Aspekt des erfindungsgemäßen Verfahrens verknüpft Benutzereingaben und die hiermit in die Prozessverarbeitung hineingegebenen Kriterien, die der Prozesssteuerung zuvor noch nicht bekannt waren, mit den von der Prozesssteuerungszentrale verfügbar gehaltenen Fehlerbehebungsszenarien, so dass die Prozesssteuerungszentrale in die Lage versetzt ist, ihre gespeicherten und programmgesteuerten Fehlerbehebungsabläufe und Fehlerbehebungsszenarien mit den Benutzereingaben in einer Weise zu verknüpfen, dass ein allmählich lernendes System gebildet wird, in dem die Benutzervorgaben und die Wünsche des mit der Fehlerbehebung befassten Benutzers allmählich zur Veränderung der Programmabläufe führen, so dass letztlich die Benutzervorgaben von der Prozesssteuerungszentrale adaptiert und in einer Weise übernommen werden, dass sich den zu erwartenden Benutzervorgaben angenähert wird.

Bei dem erfindungsgemäßen Verfahren kann es sich insbesondere um ein Verfahren zur Steuerung von Produktions- oder Handhabungsprozessen von Artikeln, insbesondere von Behältern oder Behältergruppen handeln, wie diese Prozesse bereits oben schon genannt wurden. Es kann vorzugsweise bei dem Verfahren wenigstens ein Prozessparameter ermittelt werden, der auf eine Störung zumindest von Teilen des Produktions- oder Handhabungsprozessen von Artikeln oder Behältern oder der betrachteten Produktions- oder Handhabungsprozesse von Artikeln oder Behältern hinweist.

Ebenso kann es sich bei dem erfindungsgemäßen Verfahren um ein Verfahren zur Steuerung von Förder- und/oder von Verpackungsprozessen von Artikeln, insbesondere von Behältern oder Behältergruppen handeln, bei welchem Verfahren wenigstens ein Prozessparameter ermittelt wird, der auf eine Störung zumindest von Teilen des Prozesses oder der Prozesse hinweist.

Die wenigstens zwei von der eingesetzten Prozesssteuerungszentrale ausgewählten Alternativen zur Prozessmodifikation können sinnvollerweise jeweils unterschiedliche Strategien zur zumindest teilweisen Behebung der festgestellten Störung vorsehen.

Das Verfahren kann in einer Weise ablaufen, dass bei den jeweils ausgewählten Alternativen zur Prozessmodifikation das vorrangige Kriterium der Reduzierung eines Ausmaßes oder des messbaren Grades der zu behebenden Störung berücksichtigt wird.

Wahlweise kann das Verfahren auch in einer Weise ablaufen, dass bei den jeweils ausgewählten Alternativen zur Prozessmodifikation das vorrangige Kriterium der Reduzierung eines Zeitverlustes oder eines geringen Grades einer Prozessverzögerung berücksichtigt wird. Bei dieser Verfahrensvariante werden vorzugsweise die verglichenen und auszuwählenden Fehlerbehebungsszenarien nach dem Kriterium der schnelleren Fehlerbehebung ausgewählt und/oder dem Benutzer für nachfolgende Fehlerbehebungsvorgänge vorrangig zur Auswahl angeboten.

Als weitere Verfahrensalternative kann vorgesehen sein, dass bei den jeweils ausgewählten Alternativen zur Prozessmodifikation das vorrangige Kriterium der Aufrechterhaltung des Weiterbetriebes der mit dem Verfahren betriebenen Prozesse zur Handhabung der Artikel oder Behälter berücksichtigt wird, und dies ggf. unter Inkaufnahme kleinerer Störungen, von Reduzierungen der erzielbaren Prozessgeschwindigkeiten, einer Reduzierung der Prozessgüte etc.

Weiterhin kann das erfindungsgemäße Verfahren vorsehen, dass in zeitlicher Abfolge des Prozesses oder der Prozesse jeder einzelne störungsanzeigende Prozessparameter sowie die jeweils von der Prozesssteuerungszentrale ausgewählten und ausgeführten Prozessmodifikationen zur Behebung oder teilweisen Behebung der Störung erfasst und gespeichert werden, um von der Prozesssteuerungszentrale verarbeitet und zur Auswahl aus den wenigstens zwei unterschiedlichen Szenarien verwendet zu werden.

Die Prozesssteuerungszentrale berücksichtigt zudem bei jeder auftretenden und zu behebenden Störung mindestens ein zusätzliches Kriterium zur Reduzierung des Ausmaßes oder des messbaren Grades der zu behebenden Störung berücksichtigen, wobei dieses Kriterium insbesondere in einer manuellen Benutzervorgabe durch Änderung oder Bestätigung der von der Prozesssteuerungszentrale vorgenommenen Auswahl zwischen den mindestens zwei angebotenen Alternativen zur Prozessmodifikation bestehen kann. Hierbei kann die Benutzereingabe insbesondere durch optische und/oder akustische Anzeigen in einer Anzeigeeinrichtung, an einem Benutzerterminal, an einer grafischen Benutzeroberfläche o. dgl. unterstützt werden.

Die Benutzereingabe und die Entscheidungen des Benutzers können zudem sinnvollerweise durch entsprechende Vorgaben oder Vorschläge, vermittelt insbesondere durch eine optische Anzeige oder eine Anzeige einer grafischen Benutzeroberfläche in positiver Weise beeinflusst werden, indem der Benutzer hierdurch gelenkt oder zumindest unterstützt wird.

Das erfindungsgemäße Verfahren ändert darüber hinaus vorsehen, dass jegliche von der Prozesssteuerungszentrale erfasste und verarbeitete Benutzervorgabe die Gewichtung bei zukünftigen Auswahlentscheidungen zwischen den mindestens zwei angebotenen Alternativen zur Prozessmodifikation dahingehend, dass zukünftige Auswahlentscheidungen einer zuvor erfolgten Benutzervorgabe angenähert werden.

Wahlweise kann auch diese Änderungen für den Benutzer kenntlich gemacht, insbesondere visualisiert werden, um ihm zukünftige Benutzereingaben zu erleichtern.

Nach einmaligem oder nach mehrmaligem Anwählen eines jeweils anderen Szenarios für die weiteren oder nachfolgenden Prozessabschnitte und beim Auftreten desselben oder eines vergleichbaren Fehlers wird bei dem Verfahren vorzugsweise jeweils vorrangig dieses Fehlerbehebungsszenario angeboten, z.B. an einem Eingabeterminal oder an einer grafischen Benutzeroberfläche.

Als ein besonders charakteristisches Merkmal des erfindungsgemäßen Verfahrens kann es insbesondere angesehen werden, dass innerhalb eines einfach strukturierten oder auch eines komplexeren Prozesssteuerungsvorganges zur Vermeidung von Fehlern, welche geeignet sind, die Prozesse zu stören, jeweils Fehlerbehebungsszenarien zur Verfügung stehen und innerhalb eines Fehlerbehebungsvorganges angewandt werden. Hierbei kann es grundsätzlich zunächst sinnvoll sein, dasjenige Fehlerbehebungsszenario anzubieten und einzusetzen, bei dem eine größere errechnete Übereinstimmung mit dem konkret aufgetretenen Fehlerfall vorliegt als bei alternativen Szenarien.

Allerdings kann es Gründe geben, sich statt des vorrangig ausgewählten und von der Prozesssteuerungszentrale angebotenen Fehlerbehebungsszenario für ein alternatives Szenario zu entscheiden und dieses zu bevorzugen, etwa weil der jeweils mit der Anlagenführung befasste Operator erkennt, dass im zunächst vorgeschlagenen Fehlerbehebungsszenario bestimmte Randbedingungen nicht berücksichtigt sind, die er erkennt oder über die er aus seiner Erfahrung zurückgreifen kann, so dass ihm die Wahl eines anderen oder alternativ verfügbaren Fehlerbehebungsszenarios plausibler erscheinen mag.

Für einen solchen Fall einer manuellen Abweichung von einem primär vorgeschlagenen Fehlerbehebungsszenario stellt die im Verfahren eingesetzte Prozesssteuerungszentrale vorzugsweise geeignete Eingabemöglichkeiten in Gestalt einer Benutzerschnittstelle (z.B. sog. HMI Human Machine Interface) zur Verfügung, die dem Benutzer sinnvollerweise eine grafische Benutzeroberfläche anbieten kann, um ihm die Eingaben sowie die Erkennbarkeit und die Nachverfolgbarkeit seiner manuellen Eingriffe in die Maschinenprogramme zu erleichtern.

Wenn der Benutzer anstelle von vorgeschlagenen Fehlerbehebungsszenarien mindestens einmal, insbesondere jedoch mehrfach jeweils andere Szenarien durch manuelle Eingriffe in die Programmsteuerung ausgewählt hat, ist es sinnvoll, wenn das Verfahren sein Auswahlverhalten dahingehend ändert, dass die manuelle Auswahl vorheriger Szenarien deren Priorisierung im automatisierten oder teilautomatisierten Auswahlprozess der Programmsteuerung der Prozesssteuerungszentrale beeinflusst und zwar solchermaßen, dass solche vom Benutzer bevorzugten Fehlerbehebungsszenarien auch in der zukünftigen automatisierten oder teilautomatisierten Auswahl innerhalb der von der Prozesssteuerungszentrale gesteuerten Prozesse bevorzugt ausgewählt werden, ggf. sogar mit höchster Priorität.

Außerdem kann wahlweise die durchschnittliche Ablaufdauer eines Fehlerbehebungsszenarios für einen Fehlerfall aufgezeichnet werden, um durch einen Vergleich der unterschiedlichen Zeitdauern die Abläufe noch weitergehend zu optimieren. So kann bspw. die Dauer eines Fehlerbehebungsszenarios, das die Entfernung eines umgefallenen Behälters aus einem Förderprozess vorsieht, gegenüber einem alternativen Fehlerbehebungsszenarios, das die roboterunterstützte Wiederaufrichtung des umgefallenen Behälters innerhalb des Förderabschnittes vorsieht, günstigere Werte liefern und eine schnellere Wiederherstellung ungestörter Prozessabläufe ermöglichen, so dass bspw. auf eine solche Weise Abläufe optimiert werden können.

Da solche Priorisierungen jedoch den Intentionen eines die Prozesse beobachtenden und ggf. steuernd eingreifenden Operators zuwiderlaufen können, etwa weil er die zusätzliche Randbedingung berücksichtigt wissen will, mit einem möglichst geringen Ausschuss an zu entfernenden oder zu entsorgenden Behältern zu arbeiten, kann er durch manuelle Eingriffe in die Prozesssteuerung das von der Prozesssteuerungszentrale zunächst ausgewählte Fehlerbehebungsszenario übersteuern, obwohl es eine schnellere Fehlerbehebung verspricht. Wenn er der Prozesssteuerungszentrale stattdessen das von ihm bevorzugte und länger dauernde Fehlerbehebungsszenario vorgibt, bei dem der umgefallene Behälter wieder aufgerichtet werden und im Förderprozess belassen werden soll, so kann die Prozesssteuerungszentrale diese manuelle Übersteuerung in zukünftigen Auswahlentscheidungen aufgreifen und höher priorisieren, als dies zuvor der Fall war, so dass es bei zukünftigen vergleichbaren oder gleichartigen Fehlerfällen bevorzugt ausgewählt werden wird.

Umgekehrt kann die Priorisierung bspw. in Fällen geändert und vom Operator entsprechend beeinflusst werden, wenn sich etwa herausstellt, dass manche Prozesse zwar nicht völlig fehlerfrei ablaufen, jedoch mit etwas geringerer Prozessgeschwindigkeit noch immer zufriedenstellend aufrechterhalten werden können, so dass die Anlage weiterbetrieben werden kann, wenn auch mit geringerem Behälterdurchsatz. Wenn in solchen Fällen ein von der Prozesssteuerungszentrale bevorzugt ausgewähltes Fehlerbehebungsszenario vorsähe, den Prozess anzuhalten, die Anlage stillzusetzen, um in die fehlerbehafteten Prozessabschnitte eingreifen und dort einen ggf. erkannten Fehler beheben zu können, kann dies dem Operator im Interesse einer von ihm möglicherweise besser einzuschätzenden Gesamtproduktivität als ungünstig erscheinen, etwa weil in wenigen Stunden ohnehin ein turnusmäßiger Anlagenstillstand für anstehende Wartungs- und/oder Instandhaltungsarbeiten ansteht, in dessen Rahmen die Fehler ebenso behoben werden können.

Da die Prozesssteuerungszentrale für solche Situationen in aller Regel keine angemessenen Programmvorgaben bieten kann, kann es sinnvoll sein, das weiterhin verfügbare Fehlerbehebungsszenario, das in einer Reduzierung der Prozessgeschwindigkeiten unter Inkaufnahme geringerer Fehler in einzelnen Anlagenmodulen bestehen kann, einem sofortigen Anlagenstillstand zum Zwecke der Fehlerbeseitigung vorzuziehen, und dies vorzugsweise auch bei mehrfach sensorisch erfassten Fehlermeldungen im betroffenen Anlagenmodul, sofern die Prozesse dennoch trotz dieses erfassten Fehlers weiterlaufen können.

Eine automatisierte Fehlerbehebung kann bspw. mittels eines hierfür geeigneten und entsprechend ausgestatteten Roboters erfolgen. Mit der Fehlerbehebung können z.B. auch autonom arbeitende Fehlerbehebungseinrichtungen betraut sein, ggf. unter Nutzung und Unterstützung eines fahrerlosen Transportsystems (sog. FTS). In diesem Fall werden sinnvollerweise solche Steuerparameter erzeugt und verwendet, die in der Lage sind, einen solchermaßen programmierten Roboter oder eine andere geeignete Fehlerbehebungseinrichtung entsprechend zu kontrollieren und die automatisierte Fehlerbehebung anzusteuern.

Die Verarbeitung der in der Prozesssteuerung auftretenden Ereignisse kann grundsätzlich auf jeweils unterschiedliche Weise erfolgen, wie dies weiter oben schon dargestellt wurde. So kann bei einer ersten Variante des Verfahrens vorgesehen sein, dass manche sensorisch erfassten oder von der Anlagensteuerung gemeldeten Fehlerereignisse lediglich gespeichert und für weitere Konsequenzen für die Anlagensteuerung verfügbar gemacht werden.

Bei solchen Fehlern, die als gravierend für den jeweiligen Prozessablauf eingestuft werden oder bei solchen Fehlern, die nicht unmittelbar behebbar sind, um den Prozessablauf fehlerfrei fortführen zu können, kann es etwa sinnvoll sein, aus dem Fehlerereignis ein Anhalten zumindest des betroffenen Teilabschnittes des jeweiligen Produktions-, Handhabungs-, Verpackungs- und/oder Förderprozesses oder des gesamten Prozesses abzuleiten. Ein Anhalten des Prozesses in seiner Gesamtheit kann insbesondere bei kritischen Parameterabweichungen oder zu großen Abweichungen sinnvoll sein, die keine Fortsetzung des Prozesses mehr sinnvoll erscheinen lassen, etwa weil tiefgreifende Störungen zu erwarten oder die gravierenden Störungsfolgen zunächst beseitigt werden müssen, bevor der Prozess wieder anlaufen kann.

In solchen Fällen wird auch eine Priorisierungsänderung bei erfolgten manuellen Steuerungseingriffen eines Operators nur wenig zur zukünftigen Verbesserung der Fehlerbehebungsszenarien beitragen können.

Bei einer alternativen Verfahrensvariante kann es dagegen sinnvoll und somit vorgesehen sein, dass aus dem definierten Ereignis zumindest ein Steuerparameter abgeleitet wird, aus dem prozessbeeinflussende oder prozessverändernde Steuervorgaben für das Verfahren gebildet werden. Solche Steuervorgaben können insbesondere sinnvolle Korrekturen im Prozessablauf einleiten oder bewirken, die entweder zu einer Aufrechterhaltung des jeweils ablaufenden Produktions-, Handhabungs-, Verpackungs- und/oder Förderprozesses oder zu dessen Verbesserung, d.h. zu einer Verringerung der Störungseinflüsse oder der Störungsanfälligkeit, beitragen können. Somit kann aus der sensorischen Erfassung und Signaldatenverarbeitung von auftretenden Fehlern in irgendeiner Prozessphase ein Steuersignal für einen Aktor oder mehrere Aktoren generiert werden, die in geeigneter Weise auf den Prozessablauf zurückwirken, etwa durch Ansteuerung von Förderantrieben oder von Leit- oder Lenkeinrichtungen, die sich im Förderweg für den Behältertransport befinden.

Diese Steuereingriffe seien lediglich beispielhaft genannt, denn es kommen zahlreiche andere Varianten einer Prozessbeeinflussung in Frage, die jeweils geeignet sein können, den Prozessablauf positiv zu beeinflussen, um solchermaßen einen gravierenderen Eingriff in die Anlagensteuerung bis hin zum Maschinenstopp möglicherweise obsolet zu machen.

Bei einer weniger invasiven dritten Verfahrensvariante kann außerdem vorgesehen sein, dass aus dem definierten Ereignis ein Fehlerereignis abgeleitet wird, das zumindest gespeichert, in einer Datenverarbeitung weiteren Verarbeitungsschritten verfügbar gemacht und vorzugsweise über eine Benutzerschnittstelle wie eine Anzeigeeinrichtung o. dgl. visualisiert oder auf sonstige Weise einem Benutzer zugänglich gemacht wird. Bei dieser Variante des Verfahrens können die Fehlerereignisse auf unterschiedliche Weise von der automatisierten Datenverarbeitung und/oder vom Benutzer verarbeitet und/oder modifiziert werden, bevor sie ggf. als prozessverändernde oder prozessbeeinflussende Stellgrößen verwendet werden.

Gerade bei solchen Fehlerereignissen kann die erfindungsgemäße Priorisierungsänderung bei den zu wählenden Fehlerbehebungsszenarien sinnvoll zur Anwendung kommen, da sich die jeweils sinnvollste Strategie zur Fehlerbehebung einerseits im Zeitablauf ändern kann, und da andererseits der Operator im Einzelfall besser beurteilen kann, wie er sein jeweiliges persönliches Optimum bei der Auswahl der jeweils praktikablen Fehlerbehebungsstrategie und bei der Einschätzung der Anlagenperformance definieren will.

Unabhängig von der nachträglichen Modifizierung der Fehlerereignisse oder der Fehlerbehebungsszenarien bzw. deren Anpassung an die jeweiligen Erfordernisse kann bei dem Verfahren wahlweise vorgesehen sein, dass die mittels der die Sensordaten oder Anlagendaten verarbeitenden Prozesssteuerungszentrale generierten prozessbeeinflussenden oder prozessverändernden Steuervorgaben in einer Weise verwendet werden, dass damit wenigstens ein Aktor angesteuert wird, der insbesondere auf den betroffenen Teilabschnitt des jeweiligen Produktions-, Handhabungs-, Verpackungs- und/oder Förderprozesses einwirkt und einen Prozessparameter verändert.

Hiermit können bspw. alle denkbaren Teilaspekte des hier so bezeichneten Prozesses gemeint sein, ob dies eine Blasmaschine, ein Abfüllmodul, ein Etikettiermodul, einen Förderabschnitt ist oder einen anderen Teilbereich einer Anlage zur Behälterbehandlung betrifft.

Sofern Steuervorgaben mittels Aktoren umgesetzt werden, kann ein vorrangiges Ziel solcher steuernden Eingriffe in die einzelnen Prozessabschnitte im Wesentlichen darin bestehen, die jeweils dort auftretenden Sollwertabweichungen zu verringern oder zu beseitigen. Auf diese Weise ist es vorstellbar, mit Hilfe der aus den generierten Steuerbefehlen abgeleiteten Steuervorgaben für das Verfahren das Ausmaß der Überschreitung der definierten Anzahl an Abweichungen der Parameterwerte vom jeweiligen Sollwertbereich signifikant zu reduzieren oder die Abweichungen im günstigsten Fall sogar vollständig zu eliminieren, was wiederum durch sensorische Überwachung erkannt und verarbeitet werden kann. Somit kann durch entsprechende steuernde Eingriffe im Prozess ein geschlossener Regelkreis zur Prozessoptimierung gebildet werden.

Ebenso vorstellbar ist es weiterhin, wahlweise oder in Kombination mit der vorherigen Verfahrensvariante, dass die aus dem abgeleiteten Steuerbefehl abgeleiteten Steuervorgaben für das Verfahren das Ausmaß der Abweichungen der Parameterwerte vom jeweiligen Sollwertbereich reduzieren, im Idealfall auf einen Wert von Null oder annähernd Null. Da auch diese Eingriffe sowie die dadurch erzielten Effekte wiederum sensorisch überwacht werden können, ist auch auf diese Weise das Merkmal des geschlossenen Regelkreises erfüllt, so dass es sich beim vorliegend betrachteten Verfahren nicht nur um ein klassisches Überwachungs- und Steuerungsverfahren für behälterverarbeitende und Behälter behandelnde Prozesse der unterschiedlichsten Art handelt, sondern es sich darüber hinaus auch um ein Regelungsverfahren handeln kann.

Sofern aus Sicht des angesprochenen Fachmannes sinnvoll miteinander kombinierbar, können einige der oder alle dieser zuvor genannten Variationen oder Ausführungsvarianten des erfindungsgemäßen Verfahrens wahlweise auch miteinander kombiniert werden, um das oben formulierte Ziel zumindest teilweise zu erreichen, um sich dem formulierten Ziel so weit wie möglich anzunähern und/oder um den gewünschten Effekt der Erfindung zumindest näherungsweise zu erzielen.

Zur Erreichung zumindest von Teilen des oben genannten Ziels schlägt die vorliegende Erfindung neben dem oben in verschiedenen Ausgestaltungen beschriebenen Verfahren eine Steuerungseinheit oder eine Prozesssteuerungszentrale vor, die dafür vorgesehen und ausgestattet ist, Prozesse im Zusammenhang mit der Handhabung von Artikeln, insbesondere von Behältern oder Behältergruppen zu steuern, wobei die Steuerungseinheit insbesondere zur Durchführung des oben beschriebenen Verfahrens vorgesehen und geeignet ist. Die erfindungsgemäße Steuerungseinheit berücksichtigt wenigstens einen Prozessparameter, der auf eine potentielle Störung zumindest von Teilen des ablaufenden und/oder gesteuerten Prozesses oder der ablaufenden und/oder gesteuerten Prozesse hinweist.

Eine mittels der Steuerungseinheit vorgebbare Prozessmodifikation zur zumindest teilweisen Behebung der Störung kann aus einer Auswahl von mindestens zwei angebotenen Alternativen zur Prozessmodifikation zumindest unter Berücksichtigung eines Kriteriums der Reduzierung des Ausmaßes oder des messbaren Grades der zu behebenden Störung von der Steuerungseinheit oder der Prozesssteuerungszentrale ausgewählt werden, wobei diese Auswahl typischerweise von der Steuerungseinheit oder der Prozesssteuerungszentrale selbsttätig durchgeführt wird.

Dabei werden nicht nur die einzelnen störungsanzeigenden Prozessparameter sowie die jeweils von der Steuerungseinheit ausgewählten und ausgeführten Prozessmodifikationen zur Behebung oder teilweisen Behebung der Störung erfasst und gespeichert, sondern die Steuerungseinheit berücksichtigt vorzugsweise bei jeder auftretenden und zu behebenden Störung mindestens ein zusätzliches Kriterium zur Reduzierung des Ausmaßes oder des messbaren Grades der zu behebenden Störung. Das Ausmaß oder der Grad der zu behebenden Störung wird vorzugsweise dadurch reduziert, indem eine manuelle Benutzervorgabe durch Änderung oder Bestätigung der von der Prozesssteuerungszentrale vorgenommenen Auswahl zwischen den mindestens zwei angebotenen Alternativen zur Prozessmodifikation erfolgen kann.

Außerdem ändert jegliche von der Steuerungseinheit oder der Prozesssteuerungszentrale erfasste und verarbeitete Benutzervorgabe die Gewichtung bei zukünftigen Auswahlentscheidungen zwischen den mindestens zwei angebotenen Alternativen zur Prozessmodifikation dahingehend, dass zukünftige Auswahlentscheidungen einer zuvor erfolgten Benutzervorgabe angenähert werden.

Bei einer Ausführungsvariante der erfindungsgemäßen Steuerungseinheit kann vorgesehen sein, dass die wenigstens zwei von der Steuerungseinheit ausgewählten Alternativen zur Prozessmodifikation jeweils unterschiedliche Strategien zur zumindest teilweisen Behebung der festgestellten Störung vorsehen.

Weiterhin kann die Steuerungseinheit bei jeder auftretenden und zu behebenden Störung mindestens ein zusätzliches Kriterium zur Reduzierung des Ausmaßes oder des messbaren Grades der zu behebenden Störung berücksichtigen. In diesem Zusammenhang kann eine manuelle Benutzervorgabe berücksichtigt werden, die in einer Änderung oder Bestätigung der von der Prozesssteuerungszentrale vorgenommenen Auswahl zwischen den mindestens zwei angebotenen Alternativen zur Prozessmodifikation besteht.

Bei einer weiteren Ausführungsvariante der erfindungsgemäßen Steuerungseinheit kann vorgesehen sein, dass jegliche von der Steuerungseinheit erfasste und verarbeitete Benutzervorgabe die Gewichtung bei zukünftigen Auswahlentscheidungen zwischen den mindestens zwei angebotenen Alternativen zur Prozessmodifikation dahingehend ändert, dass zukünftige Auswahlentscheidungen einer zuvor erfolgten Benutzervorgabe angenähert werden.

Bei der Steuerungseinheit kann zudem eine durchschnittliche Dauer eines Fehlerbehebungsszenarios für einen Fehlerfall aufgezeichnet und gespeichert werden, insbesondere um durch einen Vergleich der unterschiedlichen Zeitdauern die Abläufe zu optimieren.

Sofern aus Sicht des angesprochenen Fachmannes sinnvoll miteinander kombinierbar, können einige der oder alle dieser zuvor genannten Variationen oder Ausführungsvarianten der erfindungsgemäßen Steuerungseinheit wahlweise auch miteinander kombiniert werden, um das oben formulierte Ziel zumindest teilweise zu erreichen, und/oder um den gewünschten Effekt der Erfindung zu erzielen.

Es sei an dieser Stelle ausdrücklich erwähnt, dass alle Aspekte und Ausführungsvarianten, die im Zusammenhang mit der erfindungsgemäßen Steuerungseinheit erläutert wurden, gleichermaßen Teilaspekte des erfindungsgemäßen Verfahrens betreffen oder bilden können. Wenn daher an einer Stelle bei der Beschreibung oder auch bei den Anspruchsdefinitionen zur erfindungsgemäßen Steuerungseinheit von bestimmten Aspekten und/oder Zusammenhängen und/oder Wirkungen die Rede ist, so gilt dies gleichermaßen für das erfindungsgemäße Verfahren. In umgekehrter Weise gilt dasselbe, so dass auch alle Aspekte und Ausführungsvarianten, die im Zusammenhang mit dem erfindungsgemäßen Verfahren erläutert wurden, gleichermaßen Teilaspekte der erfindungsgemäßen Steuerungseinheit betreffen oder sein können. Wenn daher an einer Stelle bei der Beschreibung oder auch bei den Anspruchsdefinitionen zum erfindungsgemäßen Verfahren von bestimmten Aspekten und/oder Zusammenhängen und/oder Wirkungen die Rede ist, so gilt dies gleichermaßen für die erfindungsgemäße Steuerungseinheit.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.
Fig. 1 zeigt eine stark schematisierte Darstellung einer denkbaren Ausführungsvariante eines Anlagenausschnittes einer Anlage zur Produktion, Abfüllung, Handhabung, Verpackung und/oder Förderung von Behältern.
Fig. 2 zeigt ein Blockdiagramm, welches in schematischer Weise die Verfahrensschritte eines Verfahrens zur Steuerung von Produktions-, Handhabungs-, Verpackungs- und/oder Förderprozessen von Behältern darstellt.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie das erfindungsgemäße Verfahren ausgestaltet sein können und stellen keine abschließende Begrenzung dar.

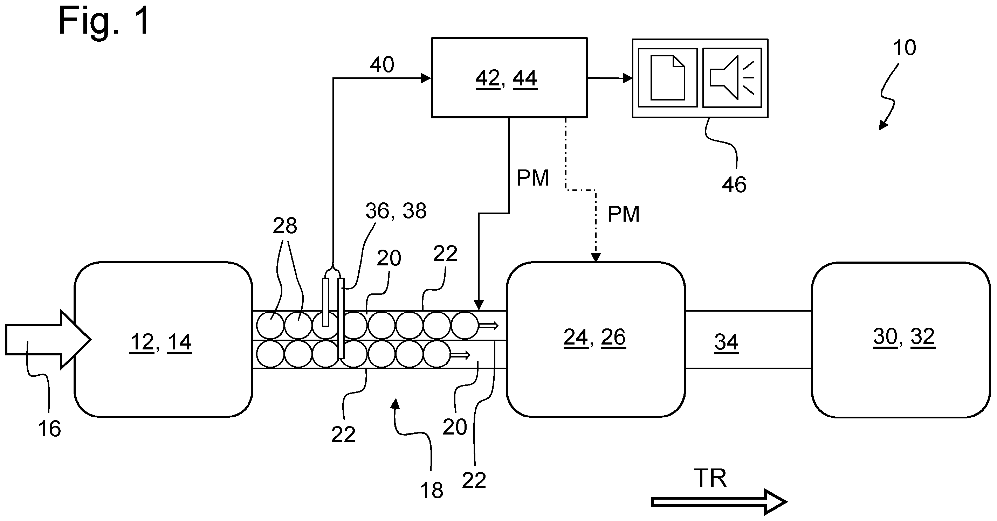

Die stark schematisierte Darstellung der Fig. 1 veranschaulicht ein Ausführungsbeispiel einer hier mit der Bezugsziffer 10 gekennzeichneten Anlage zur Produktion, Abfüllung, Handhabung, Verpackung und/oder Förderung von Behältern mit darin aufgenommenen flüssigen oder pastösen Produkten. Diese Anlage wird in der nachfolgenden Beschreibung auch als Behälterbehandlungsanlage 10 bezeichnet. Anhand dieser Anlage 10, wie sie schematisch in der Fig. 1 gezeigt ist, soll in den nachfolgenden Erläuterungen beispielhaft die Anwendung des erfindungsgemäßen Verfahrens 100 veranschaulicht werden.

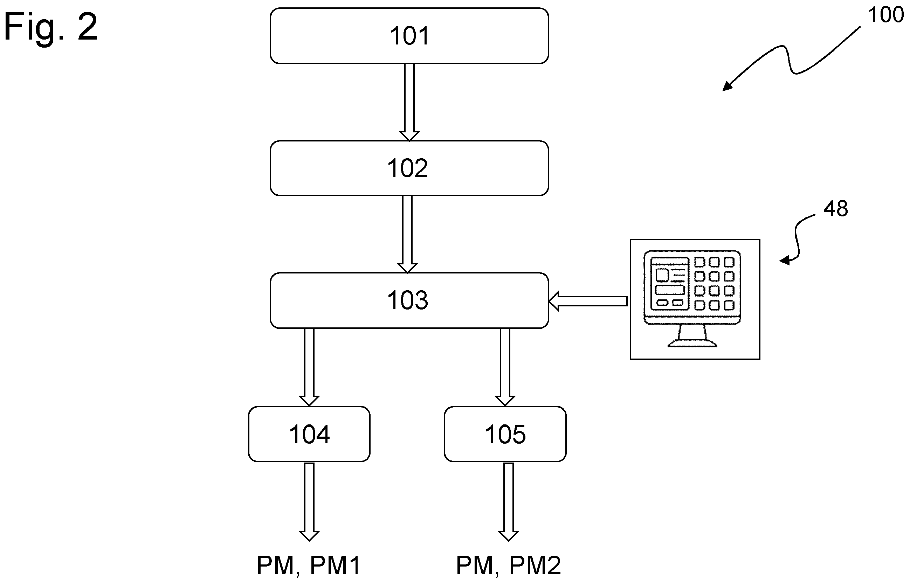

Um das Verständnis der einzelnen Prozessschritte und Prozessphasen dieses Verfahrens 100 zu erleichtern, sind in der Fig. 2 aufeinander folgende Verfahrensschritte 101, 102, 103, 104 und/oder 105 eines Verfahrens 100 zur Steuerung von Produktions-, Handhabungs-, Verpackungs- und/oder Förderprozessen von Behältern mit darin aufgenommenen flüssigen oder pastösen Produkten, insbesondere im Zusammenhang mit dem Betrieb einer Anlage 10 gemäß Fig. 1 veranschaulicht. Es wird daher bei der folgenden Beschreibung wesentlicher Anlagenfunktionalitäten und der damit im Zusammenhang stehenden Verfahrensaspekte jeweils gleichermaßen auf die Figuren 1 und 2 Bezug genommen.

Bei den Behältern, die mit der erfindungsgemäßen Behälterbehandlungsanlage 10 unter Nutzung des Verfahrens 100 verarbeitet werden, handelt es sich vorzugsweise um verschlossene Behälter mit darin aufgenommenen flüssigen oder pastösen Produkten, insbesondere um Behälter aus Kunststoff, Glass oder Metall. Besonders bevorzugt handelt es sich um Getränkebehälter in Form von Flaschen oder Dosen.

Die Behälterbehandlungsanlage 10 gemäß Fig. 1 kann ein erstes Anlagenmodul 12 umfassen, das bspw. durch ein Etikettiermodul 14 o. dgl. gebildet ist, in das zuvor abgefüllte Behälter mittels eines Behälterzulaufs 16 in Transportrichtung TR (in Fig. 1 von links nach rechts gemäß Pfeilrichtung) hineinbefördert werden, um dort etikettiert zu werden. Ein Transportabschnitt 18 mit mehreren parallelen Einzelgassen 20, die jeweils durch definiert voneinander beabstandete Gassenbleche 22 voneinander abgetrennt und gemäß den Behälterdurchmessern sinnvoll voneinander beabstandet sind, führt in Transportrichtung TR zu einem sich an das erste Anlagenmodul 12 anschließenden zweiten Anlagenmodul 24.

Dieses zweite Anlagenmodul 24 kann bspw. durch eine Gruppierstation 26 gebildet sein, in der eine definierte Anzahl an Behältern 28, die in den Transportgassen 20 jeweils in schematischer Weise zeichnerisch angedeutet sind, gruppiert werden, um in einem nachfolgenden dritten Anlagenmodul 30 verpackt zu werden. Somit kann das hier zeichnerisch angedeutete dritte Anlagenmodul 30 bspw. durch eine Verpackungsstation 32 gebildet sein, wo die zuvor gruppierten Behälter 28 in geeigneter Weise verpackt und zu Verpackungseinheiten weiterverarbeitet werden können, etwa durch Ausstattung mit einem Verpackungszuschnitt aus Karton, durch Umhüllung mit unter Wärmeeinwirkung schrumpfbarer Verpackungsfolie, durch Aufbringen einer um die Behälter 28 gespannten Umreifung oder durch Einsatz anderer, hier nicht genannter Verpackungsmittel oder Umverpackungen.

Sofern sich das durch die Verpackungsstation 32 gebildete dritte Anlagenmodul 30 nicht unmittelbar an das durch die Gruppierstation 26 gebildete zweite Anlagenmodul 24 anschließt, kann sich auch zwischen den beiden Anlagenmodulen 24 und 30 ein weiterer Transportabschnitt 34 befinden, auf dem die gruppierten Behälter 28 in Transportrichtung TR von der Gruppierstation 26 zur Verpackungsstation 32 weiterbefördert werden. An das dritte Anlagenmodul 30 oder die Verpackungsstation 32 können sich weitere Anlagenteile oder Module anschließen, etwa zur Palettierung der zuvor in der Verpackungsstation 32 hergestellten Verpackungseinheiten, was aber hier nicht näher dargestellt ist, da es sich bei der Fig. 1 lediglich um eine schematische Darstellung einiger beispielhaft zu verstehender Module einer Behälterbehandlungsanlage 10 handeln soll.

In der Fig. 1 sind mehrere Sensoren 36 erkennbar, die sich jeweils im Transportabschnitt 18 zur sensorischen Überwachung des Behältertransports innerhalb der Transportgassen 20 angeordnet befinden können. Gemäß Fig. 2 wird mittels der Sensoren 36 in einem ersten Verfahrensschritt 101 sensorisch ermittelt, ob Störungen im überwachten Anlagenbereich vorliegen, hier innerhalb der einzelnen Transportgassen 20 des Transportabschnittes 18. Dieser im ersten Verfahrensschritt 101 ermittelte Prozessparameter, der sich auf den ordnungsgemäßen Transport der Behälter 28 innerhalb des Transportabschnittes 18 bezieht, kann fortlaufend oder auch zyklisch in wiederkehrenden Zeitabständen erfasst werden.

Der oder die gewonnenen Prozessparameter können bspw. mittels optischer Sensoren 36 ermittelt werden, wobei diese optischen Sensoren 36 in vorteilhafter Weise durch jeweils den einzelnen Transportgassen 20 des Transportabschnittes 18 zugeordneten Kameras 38 mit nachgeschalteter Bildauswertung gebildet sein können, um solchermaßen etwa Stauungen durch verklemmte oder umgefallene Behälter 28 innerhalb der einzelnen Transportgassen 20 zu erkennen. Die Sensoren 36 oder Kameras 38 liefern jeweils Bildsignaldaten 40 an die nachgeschaltete Prozesssteuerungszentrale 42, die für die Datenauswertung der gelieferten Bildsignaldaten 40 verantwortlich ist.

Weitere Prozessparameter können bspw. aus dem ersten Modul 12 und/oder aus dem zweiten Modul 24 gewonnen und an eine Prozesssteuerungszentrale 42 übermittelt werden, was in der Fig. 1 jedoch zeichnerisch nicht dargestellt ist. Solche Prozessparameter müssen nicht durch Sensorwerte im engeren Sinne gebildet sein, sondern es können Modulparameter der unterschiedlichsten Art sein, die jeweils Störungen, Fehlfunktionen, aber auch ein einwandfreies Funktionieren, Zählwerte, Geschwindigkeitswerte etc. anzeigen und an die Prozesssteuerungszentrale 42 übermitteln können.

Gemäß dem in Fig. 2 gezeigten Ablauf des Verfahrens 100 wird in einem zweiten Verfahrensschritt 102 der jeweils ermittelte Prozessparameter in Gestalt der von den Sensoren 36 oder den Kameras gelieferten Bildsignaldaten 40 in der Prozesssteuerungszentrale 42 gespeichert und in einem dritten Verfahrensschritt 103 mittels einer dort implementierten Datenauswertung 44 verarbeitet.

Bei der innerhalb der Prozesssteuerungszentrale 42 durchgeführten Datenauswertung 44 (vgl. Fig. 1) gemäß dem dritten Verfahrensschritt 103 (vgl. Fig. 2) werden die gespeicherten Werte der Bildsignaldaten 40 hinsichtlich einer typischen Häufung an Abweichungen von definierten Sollwertbereichen innerhalb definierter Zeiträume und/oder im Zusammenhang mit zuvor vorgenommenen Prozessmodifikationen ausgewertet. Im Rahmen der Auswertung der gespeicherten Werte bzw. Bildsignaldaten 40 kann bspw. eine Anzahl an festgestellten Über- oder Unterschreitungen der durch die jeweiligen Sollwertbereiche vorgegebenen Grenzwerte und/oder ein Ausmaß der Abweichung vom jeweiligen Sollwertbereich ermittelt werden, um solchermaßen typische Störungsmuster erkennen und ggf. beheben zu können.

Bei einer Überschreitung einer definierten Anzahl an Abweichungen vom jeweiligen Sollwertbereich oder bei einer Abweichung vom jeweiligen Sollwertbereich, die ein gegebenes Ausmaß überschreitet oder bei einer Kombination der genannten Abweichungen wird in einem vierten Verfahrensschritt 104 ein Ereignis definiert und daraus ein Steuerparameter PM für prozessbeeinflussende oder prozessverändernde Steuervorgaben im Verfahren 100 generiert. Dieser Steuerparameter PM ist in der schematischen Darstellung der Fig. 1 als Datenpfeil dargestellt, der aus der Auswerteeinrichtung 42 herausführt und zum Transportabschnitt 18 hinführt, da er dort Steuerdaten für einen Aktor (hier nicht gezeigt), für eine Verstelleinrichtung oder eine sonstige prozessbeeinflussende Einrichtung liefern kann, mit deren Hilfe eine prozessbeeinflussende Maßnahme getroffen werden kann, etwa ein Einstellvorgang zur Breitenjustierung der Gassenbleche 22 oder eine andere geeignete Maßnahme.

Bei dem gezeigten Verfahren 100 kann wahlweise weiterhin vorgesehen sein, dass die im ersten Verfahrensschritt 101 sensorisch ermittelten Werte oder Bildsignaldaten 40, die den wenigstens einen Prozessparameter repräsentieren, in einer Datenbank innerhalb der Prozesssteuerungszentrale 42 gespeichert und der Datenauswertung 44 fortlaufend zur Verfügung gestellt werden.

Das in Fig. 2 im vierten Verfahrensschritt 104 definierte Fehlerereignis kann somit jederzeit aus der Datenauswertung 44 abgeleitet werden, wobei unterschiedliche Sollwerte vorgegeben und/oder die zugelassene Anzahl an Abweichungen vom jeweiligen Sollwertbereich bedarfsweise variiert werden können.

Mit dem Verfahren 100 kann auf diese Weise ein innerhalb des vorgegebenen Sollwertbereiches befindlicher sensorisch ermittelter Parameterwert mit einem annähernd störungsfrei ablaufenden Teilabschnitt des jeweiligen Produktions-, Handhabungs-, Verpackungs- und/oder Förderprozesses korreliert sein. Im gezeigten Ausführungsbeispiel gemäß Fig. 1 kann dieser Teilabschnitt bspw. durch den Transportabschnitt 18 gebildet sein, der sich zwischen dem ersten Anlagenmodul 12 und dem zweiten Anlagenmodul 24 der Behälterbehandlungsanlage 10 befindet.

Zudem kann mit dem Verfahren 100 eine unterhalb eines vorgegebenen Grenzwertes bleibende Häufung an Überschreitungen des Sollwertbereiches mit einem störungsarm ablaufenden und vorgegebene Güteanforderungen einhaltenden Teilabschnitt des jeweiligen Produktions-, Handhabungs-, Verpackungs- und/oder Förderprozesses korreliert sein, wobei dieser Teilabschnitt hier durch den Transportabschnitt 18 gebildet ist, wahlweise aber auch andere Bereiche der Anlage 10 abbilden kann.

Die Verarbeitung des im vierten Verfahrensschritt 104 definierten Ereignisses innerhalb der Datenauswertung 44 der Prozesssteuerungszentrale 42 kann auf unterschiedliche Weise erfolgen. So kann bei einer ersten Variante des Verfahrens 100 vorgesehen sein, dass aus dem definierten Ereignis der erwähnte Steuerparameter PM in Form eines Fehlerereignisses abgeleitet wird, das zu einem Anhalten zumindest des betroffenen Teilabschnittes des jeweiligen Produktions-, Handhabungs-, Verpackungs- und/oder Förderprozesses oder des gesamten Prozesses der Anlage 10 führt. Ein Anhalten des Prozesses in seiner Gesamtheit kann insbesondere bei kritischen Parameterabweichungen oder zu großen Abweichungen sinnvoll sein, die keine Fortsetzung des Prozesses mehr sinnvoll erscheinen lassen, etwa weil tiefgreifende Störungen zu erwarten oder die gravierenden Störungsfolgen zunächst beseitigt werden müssen, bevor der Prozess wieder anlaufen kann. Dies kann etwa durch eine nicht ohne weiteres behebbare Blockade einer der Transportgassen 20 des Transportabschnittes 18 gegeben sein, so dass innerhalb der Gruppierstation 26 keine vollständigen Behältergruppierungen mehr gebildet werden können.

Bei einer zweiten Variante des Verfahrens 100 kann vorgesehen sein, dass aus dem definierten Ereignis zumindest ein Steuerparameter PM abgeleitet wird, aus dem prozessbeeinflussende oder prozessverändernde Steuervorgaben für das Verfahren 100 gebildet werden. Solche Steuervorgaben können insbesondere sinnvolle Korrekturen im Prozessablauf einleiten oder bewirken, die entweder zu einer Aufrechterhaltung des jeweils ablaufenden Produktions-, Handhabungs-, Verpackungs- und/oder Förderprozesses oder zu dessen Verbesserung, d.h. zu einer Verringerung der Störungseinflüsse oder der Störungsanfälligkeit, beitragen können.

Ein oben schon genanntes Beispiel hierfür kann etwa die Justierung der Gassenbleche 22 mittels motorischer Verstellung sein. Ein weiteres Beispiel für eine solche Maßnahme wäre die Nutzung der Steuerparameter PM als Steuervorgaben für einen Entnahmeroboter (hier nicht gezeigt), der einen umgefallen oder verklemmten Behälter 28 aus der betreffenden Transportgasse 20 entnehmen und den einwandfreien Transport in Transportrichtung TR innerhalb der zuvor störungsbehafteten Transportgasse 20 wiederherstellen kann.

Bei einer weniger invasiven dritten Variante des Verfahrens 100 kann außerdem vorgesehen sein, dass aus dem definierten Ereignis ein Steuerparameter PM in Form eines Fehlerereignisses abgeleitet wird, das zumindest gespeichert und vorzugsweise über eine Benutzerschnittstelle wie eine Anzeigeeinrichtung 46 o. dgl. visualisiert oder auf sonstige Weise einem Benutzer zugänglich gemacht wird. Bei dieser Variante des Verfahrens 100 können die Fehlerereignisse auf unterschiedliche Weise vom Benutzer verarbeitet und/oder modifiziert werden, bevor sie ggf. als prozessverändernde oder prozessbeeinflussende Stellgrößen verwendet werden. Diese als durchaus wichtig anzusehende Option ist in Fig. 1 durch den unterbrochenen Datenpfeil zwischen der Auswerteeinrichtung 42 und der Anzeigeeinrichtung 46 angedeutet.

Erwähnenswert und im Zusammenhang mit dem vierten Verfahrensschritt 104 des in Fig. 2 gezeigten Verfahrens ist die Möglichkeit, im Wesentlichen nicht nur jegliche prozessbeeinflussende Störungen durch sensorische Überwachung der entsprechenden Prozessabschnitte und Prozessphasen zu erkennen (hier des Transportabschnittes 18), sondern diese Störungsmeldungen (Bildsignaldaten 40) auch zu sammeln, zu speichern und darüber hinaus zu klassifizieren, um weitergehende Informationen und Erkenntnisse über die Art der Störungen, ihren Schweregrad und die Wahrscheinlichkeit ihres wiederholten Auftretens zu gewinnen. Die Datenauswertung 44 kann die aufgetretenen und sensorisch erfassten Störungen im Prozessablauf in geeigneter Weise klassifizieren und in verschleißbedingt auftretende Störungen oder in untypische Störungen unterteilen. In Abhängigkeit von der vorgenommenen Klassifizierung stehen dann unterschiedliche Handlungsoptionen zur Verfügung, die weiter unten anhand von weiteren Ausführungsbeispielen betrachtet werden sollen.

Anhand des in der Fig. 2 beispielhaft veranschaulichten Verfahrens 100 sollen nachfolgend die Besonderheiten durch die bewusst geschaffenen Möglichkeiten der manuellen Einflussnahme in die Verfahrensabläufe näher erläutert werden. So stellt die Prozesssteuerungszentrale 42 (vgl. Fig. 1) generell unterschiedliche automatisiert ablaufende oder teilautomatisierte Fehlerbehebungsstrategien und unterschiedliche Szenarien zur Fehlerbehebung und zur weitgehend verzögerungsfreien Fehlerbehebung zur Verfügung, zwischen denen zunächst innerhalb der Prozesssteuerungszentrale 42 eine Auswahl getroffen wird, die auch als Vorwahl oder als vorläufige Auswahl bezeichnet werden kann.

Weil es sich hierbei um eine automatisierte oder teilautomatisierte Fehlererkennung und Fehlerbeseitigung handelt, sind für die Vornahme einer sinnvollen Auswahl zwischen mindestens zwei, ggf. auch zwischen mehreren alternativen Entscheidungsvarianten gewisse Regeln vorgegeben. Diese Regeln können bspw. den Grad der Fehlerbeseitigung, die minimale Verzögerungszeit bis zur weitgehend fehlerfreien Wiederaufnahme der zuvor ablaufenden Prozesse oder andere Kriterien berücksichtigen.

Das Verfahren 100 sieht deshalb vor, dass mittels der Prozesssteuerungszentrale 42, die Teil der Anlagensteuerung oder als Unterbaugruppe innerhalb der Steuerung der Anlage 10 dort implementiert ist, zunächst mindestens eine vorgebbare Prozessmodifikation oder eine vorgebbare Prozessänderungsstrategie mit dem Ziel einer Behebung oder zumindest teilweisen Behebung der Störung aus einer Auswahl von mehreren angebotenen Alternativen zur Prozessmodifikation ausgewählt wird, ohne dass damit bereits zwingend die Implementierung der Prozessmodifikation verbunden ist. Diese vorläufig ausgewählte Prozessmodifikation bildet zunächst nur die Auswahlentscheidung der Prozesssteuerungszentrale ab, während ihre Umsetzung erst in den nächsten, sich daran anschließenden Implementierungsschritten erfolgt.

Wie zuvor erläutert, sind in der hier betrachteten Phase der erste Verfahrensschritt 101 (sensorische Ermittlung von Störungen), der zweite Verfahrensschritt 102 (Speicherung der Signaldaten 40 in der Prozesssteuerungszentrale 42) sowie der dritte Verfahrensschritt 103 (Verarbeitung der Daten mittels der Datenauswertung 44) bereits durchlaufen. Die obige Beschreibung hat zunächst nur den sich an den dritten Verfahrensschritt 103 anschließenden vierten Verfahrensschritt 104 erwähnt, nach dessen Durchlaufen ein Steuerparameter PM für prozessbeeinflussende oder prozessverändernde Steuervorgaben im Verfahren 100 generiert wird (vgl. Fig. 2).

Allerdings ist in dieser Prozessfolge gemäß der hier vorliegenden Erfindung keine Zwangsläufigkeit zu sehen, denn es wurde oben bereits von mehreren angebotenen Alternativen zur Prozessmodifikation gesprochen. Damit wurde ausgesagt und definiert, dass mindestens zwei angebotenen Alternativen zur Prozessmodifikation verfügbar sein können, zwischen denen die Prozesssteuerungszentrale 42 in einem Steuerungs- und Entscheidungsschritt auszuwählen hat.

Dieser Entscheidungsschritt ist systematisch und gemäß der Darstellung der Fig. 2 dem dritten Verfahrensschritt 103 zuzuordnen, weshalb sich dort die Verfahrensabfolge in zwei Folgeschritte verzweigt, zwischen denen die Prozesssteuerungszentrale 42 einen bevorzugten Folgeschritt 104 oder 105 auswählen kann. Der hier so bezeichnete fünfte Verfahrensschritt 105 ist dabei als auf einer Stufe mit dem vierten Verfahrensschritt 104 zu betrachten, nicht jedoch als dessen nachfolgender Schritt.

Die Verzweigung nach dem dritten Verfahrensschritt 103 in zwei nachfolgende und als alternative Prozessanweisungen zu verstehende Verfahrensschritte 104 und 105 ist nicht einschränkend zu verstehen, denn es kann sich hierbei durchaus um drei, vier oder mehr Alternativen zur Prozessmodifikation handeln, zwischen denen die Prozesssteuerungszentrale 42 unter Berücksichtigung nachfolgend zu diskutierender Auswahl- und Entscheidungskriterien zu wählen hat.

Als Kriterien, die für das Treffen einer Auswahlentscheidung zwischen den mindestens zwei Alternativen zur Prozessmodifikationen herangezogen werden können, eignet sich insbesondere das zu berücksichtigende Kriterium der Reduzierung des Ausmaßes oder des messbaren Grades der zu behebenden Störung. Als weiteres Kriterium kann das zu minimierende Ausmaß an Zeitverlust zwischen der sensorischen Erkennung einer Störung und der vollständigen Behebung der Störung mit gleichzeitiger maximal zu erreichender Prozessgeschwindigkeit herangezogen werden.

Weitere Entscheidungskriterien sind möglich und sinnvoll, wobei verschiedene dieser Kriterien gleichzeitig und ggf. mit unterschiedlicher Gewichtung für die von der Prozesssteuerungszentrale 42 zu treffenden Auswahl herangezogen werden können, um zu sinnvollen Ergebnissen zu gelangen die Auswirkungen von aufgetretenen und erkannten Störungen möglichst gering werden zu lassen.

Die Prozesssteuerungszentrale 42 kann außerdem bei jeder auftretenden und zu behebenden Störung mindestens ein zusätzliches Kriterium zur Reduzierung des Ausmaßes oder des messbaren Grades der zu behebenden Störung berücksichtigen. Ein solches zusätzliches Kriterium kann definitionsgemäß in einer manuellen Benutzervorgabe liegen, die von einem Benutzer (hier nicht dargestellt) mittels einer Benutzerschnittstelle 48, die oftmals auch als HMI (Human Machine Interface) bezeichnet wird, der Prozesssteuerungszentrale 42 im Zusammenhang mit dem dritten Verfahrensschritt 103 und dem Übergang zum vierten oder zum fünften Verfahrensschritt 104 oder 105 vorgegeben werden kann.

Durch Verwendung und Nutzung der Eingabemöglichkeit an der Benutzerschnittstelle 48 wird es dem Benutzer ermöglicht, durch Änderung oder Bestätigung der von der Prozesssteuerungszentrale 42 vorgenommenen Auswahl zwischen den mindestens zwei angebotenen Alternativen zur Prozessmodifikation diese Fehlerbehebungsstrategien in einer Weise zu modifizieren, dass damit die Benutzervorgabe bspw. die von der Prozesssteuerungszentrale 42 vorgegebene Strategie übersteuert und verändert oder diese wahlweise auch bestätigt oder ggf. nur leicht modifiziert wird.

Darüber hinaus kann jegliche über die Benutzerschnittstelle 48 übermittelte und von der Prozesssteuerungszentrale 42 erfasste und verarbeitete Benutzervorgabe die Gewichtung bei zukünftigen Auswahlentscheidungen zwischen den mindestens zwei angebotenen Alternativen zur Prozessmodifikation (Schritte 104 oder 105) dahingehend ändern, dass zukünftige Auswahlentscheidungen einer zuvor erfolgten Benutzervorgabe angenähert werden.

Dieser weitere Aspekt des erfindungsgemäßen Verfahrens 100 verknüpft Benutzereingaben und die hiermit in die Prozessverarbeitung hineingegebenen Kriterien, die der Prozesssteuerung zuvor noch nicht bekannt waren, mit den von der Prozesssteuerungszentrale 42 verfügbar gehaltenen Fehlerbehebungsszenarien, so dass die Prozesssteuerungszentrale 42 in die Lage versetzt ist, die dort gespeicherten und programmgesteuerten Fehlerbehebungsabläufe und Fehlerbehebungsszenarien mit den Benutzereingaben in einer Weise zu verknüpfen, dass ein allmählich lernendes System gebildet wird.

Bei diesem lernenden System führen die Benutzervorgaben und die Wünsche des mit der Fehlerbehebung befassten Benutzers allmählich zur Veränderung der Programmabläufe, so dass letztlich die Benutzervorgaben von der Prozesssteuerungszentrale 42 adaptiert und in einer Weise übernommen werden, dass sich den zu erwartenden Benutzervorgaben angenähert wird. Diese als iterativ zu verstehenden lernenden Abläufe finden gemäß der schematischen Darstellung der Fig. 2 innerhalb des dritten Verfahrensschrittes 103 statt, dem sich jeweils die vierten und/oder fünften Verfahrensschritte 104 bzw. 105 anschließen können.

Die wenigstens zwei von der eingesetzten Prozesssteuerungszentrale 42 ausgewählten Alternativen zur Prozessmodifikation, dargestellt durch den vierten Verfahrensschritt 104 sowie den alternativ zu sehenden fünften Verfahrensschritt 105 können sinnvollerweise jeweils unterschiedliche Strategien zur zumindest teilweisen Behebung der festgestellten Störung vorsehen, ausgedrückt durch die alternativen Steuerparameter PM1 und PM2.

Während der als Ausgangssignal des vierten Verfahrensschrittes 104 zu betrachtende erste Steuerparameter PM1 ein erstes Steuersignal zur Beeinflussung von Prozessparametern der Anlage 10 (vgl. Fig. 1) liefern kann, kann der zweite Steuerparameter PM2, der als Ausgangssignal des fünften Verfahrensschrittes 105 zu betrachten ist, ein zweites Steuersignal zur Beeinflussung von Prozessparametern der Anlage 10 liefern, wobei sich die Steuerparameter PM1 und PM2 zwingend voneinander und auch in ihren Auswirkungen auf die Anlage 10 unterscheiden.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

10 Behälterbehandlungsanlage, Anlage
12 erstes Anlagenmodul
14 Etikettiermodul
16 Behälterzuführung, Behälterzulauf
18 Transportabschnitt, erster Transportabschnitt
20 Transportgasse, Einzelgasse, breite Gasse, breite Transportgasse
22 Gassenblech, Trennblech
24 zweites Anlagenmodul
26 Gruppierstation
28 Behälter, Artikel, Getränkebehälter
30 drittes Anlagenmodul
32 Verpackungsstation, Verpackungsmodul
34 weiterer Transportabschnitt
36 Sensor, optischer Sensor
38 Kamera, Kamerasystem
40 Sensordaten, Bildsignaldaten
42 Prozesssteuerungszentrale, Auswerteeinrichtung, Steuerungseinheit
44 Datenauswertung
46 Anzeigeeinrichtung
48 Benutzerschnittstelle (HMI)
100 Verfahren
101 erster Verfahrensschritt
102 zweiter Verfahrensschritt
103 dritter Verfahrensschritt
104 vierter Verfahrensschritt
105 fünfter Verfahrensschritt
PM Steuerparameter
PM1 erster Steuerparameter
PM2 zweiter Steuerparameter
TR Transportrichtung

## Patentansprüche

1. Verfahren (100) zur Steuerung von Prozessen bei der Handhabung von Artikeln, insbesondere von Behältern (28) oder Behältergruppen, bei welchem Verfahren wenigstens ein Prozessparameter ermittelt wird, der auf eine Störung zumindest von Teilen des Prozesses oder der Prozesse hinweist,
**dadurch gekennzeichnet, dass**
- eine mittels einer Prozesssteuerungszentrale (42) vorgebbare Prozessmodifikation zur zumindest teilweisen Behebung der Störung aus einer Auswahl von mindestens zwei angebotenen Alternativen zur Prozessmodifikation zumindest unter Berücksichtigung eines Kriteriums der Reduzierung des Ausmaßes oder des messbaren Grades der zu behebenden Störung von der Prozesssteuerungszentrale (42) ausgewählt wird,
- wobei in zeitlicher Abfolge des Prozesses oder der Prozesse jeder einzelne störungsanzeigende Prozessparameter sowie die jeweils von der Prozesssteuerungszentrale (42) ausgewählten und ausgeführten Prozessmodifikationen zur Behebung oder teilweisen Behebung der Störung erfasst und gespeichert werden,
- wobei die Prozesssteuerungszentrale (42) bei jeder auftretenden und zu behebenden Störung mindestens ein zusätzliches Kriterium zur Reduzierung des Ausmaßes oder des messbaren Grades der zu behebenden Störung berücksichtigt, das in einer manuellen Benutzervorgabe durch Änderung oder Bestätigung der von der Prozesssteuerungszentrale (42) vorgenommenen Auswahl zwischen den mindestens zwei angebotenen Alternativen zur Prozessmodifikation besteht,
- und wobei jegliche von der Prozesssteuerungszentrale (42) erfasste und verarbeitete Benutzervorgabe die Gewichtung bei zukünftigen Auswahlentscheidungen zwischen den mindestens zwei angebotenen Alternativen zur Prozessmodifikation dahingehend ändert, dass zukünftige Auswahlentscheidungen einer zuvor erfolgten Benutzervorgabe angenähert werden.

2. Verfahren nach Anspruch 1, bei dem die wenigstens zwei von der eingesetzten Prozesssteuerungszentrale (42) ausgewählten Alternativen zur Prozessmodifikation jeweils unterschiedliche Strategien zur zumindest teilweisen Behebung der festgestellten Störung vorsehen.

3. Verfahren nach Anspruch 2, bei dem bei den jeweils ausgewählten Alternativen zur Prozessmodifikation das vorrangige Kriterium der Reduzierung eines Ausmaßes oder des messbaren Grades der zu behebenden Störung berücksichtigt wird.

4. Verfahren nach Anspruch 2, bei dem bei den jeweils ausgewählten Alternativen zur Prozessmodifikation das vorrangige Kriterium der Reduzierung eines Zeitverlustes oder eines geringen Grades einer Prozessverzögerung berücksichtigt wird.

5. Verfahren nach Anspruch 2, bei dem bei den jeweils ausgewählten Alternativen zur Prozessmodifikation das vorrangige Kriterium der Aufrechterhaltung des Weiterbetriebes der mit dem Verfahren betriebenen Prozesse zur Handhabung der Artikel oder Behälter (28) berücksichtigt wird.

6. Verfahren nach einem der Ansprüche 1 bis 5, bei dem die durchschnittliche Dauer eines Fehlerbehebungsszenarios für einen Fehlerfall aufgezeichnet und gespeichert wird, insbesondere um durch einen Vergleich der unterschiedlichen Zeitdauern die Abläufe zu optimieren.

7. Steuerungseinheit (42), die dafür vorgesehen und ausgestattet ist, Prozesse im Zusammenhang mit der Handhabung von Artikeln, insbesondere von Behältern (28) oder Behältergruppen zu steuern, wobei die Steuerungseinheit (42) wenigstens einen Prozessparameter berücksichtigt, der auf eine potentielle Störung zumindest von Teilen des ablaufenden und/oder gesteuerten Prozesses oder der ablaufenden und/oder gesteuerten Prozesse hinweist,
**dadurch gekennzeichnet, dass**
- eine mittels der Steuerungseinheit (42) vorgebbare Prozessmodifikation zur zumindest teilweisen Behebung der Störung aus einer Auswahl von mindestens zwei angebotenen Alternativen zur Prozessmodifikation zumindest unter Berücksichtigung eines Kriteriums der Reduzierung des Ausmaßes oder des messbaren Grades der zu behebenden Störung von der Prozesssteuerungszentrale (42) auswählbar ist,
- wobei jeder einzelne störungsanzeigende Prozessparameter sowie die jeweils von der Steuerungseinheit (42) ausgewählten und ausgeführten Prozessmodifikationen zur Behebung oder teilweisen Behebung der Störung erfasst und gespeichert werden,
- wobei die Steuerungseinheit (42) bei jeder auftretenden und zu behebenden Störung mindestens ein zusätzliches Kriterium zur Reduzierung des Ausmaßes oder des messbaren Grades der zu behebenden Störung berücksichtigen kann, das in einer manuellen Benutzervorgabe durch Änderung oder Bestätigung der von der Prozesssteuerungszentrale (42) vorgenommenen Auswahl zwischen den mindestens zwei angebotenen Alternativen zur Prozessmodifikation besteht,
- und wobei jegliche von der Prozesssteuerungszentrale (42) erfasste und verarbeitete Benutzervorgabe die Gewichtung bei zukünftigen Auswahlentscheidungen zwischen den mindestens zwei angebotenen Alternativen zur Prozessmodifikation dahingehend ändert, dass zukünftige Auswahlentscheidungen einer zuvor erfolgten Benutzervorgabe angenähert werden.

8. Steuerungseinheit (42) nach Anspruch 7, wobei die wenigstens zwei von der Steuerungseinheit (42) ausgewählten Alternativen zur Prozessmodifikation jeweils unterschiedliche Strategien zur zumindest teilweisen Behebung der festgestellten Störung vorsehen.

9. Steuerungseinheit (42) nach einem der Ansprüche 7 bis 8, bei welcher die durchschnittliche Dauer eines Fehlerbehebungsszenarios für einen Fehlerfall aufgezeichnet und gespeichert wird, insbesondere um durch einen Vergleich der unterschiedlichen Zeitdauern die Abläufe zu optimieren.

## Claims

1. A method (100) for controlling processes in the handling of articles, in particular of containers (28) or groups of containers, in which method at least one process parameter is determined that is indicative of a fault in at least parts of the process or processes,
the method being **characterised in that**
- a process modification to at least partially remedy the fault, which process modification is specifiable by a process control centre (42), is selected by the process control centre (42) from a selection of at least two offered alternatives for process modification taking into account at least one criterion for reducing the extent or the measurable degree of the fault to be remedied,
- wherein, in the chronological sequence of the process or processes, each individual process parameter indicative of a fault and the process modifications selected and carried out in each case by the process control centre (42) in order to remedy or partially remedy the fault are recorded and stored,
- wherein, for each fault that occurs and is to be remedied, the process control centre (42) takes into account at least one additional criterion for reducing the extent or the measurable degree of the fault to be remedied, which additional criterion consists in a manual user input that changes or confirms the selection made by the process control centre (42) from among the at least two offered alternatives for process modification,
- and wherein any user input recorded and processed by the process control centre (42) changes the weighting between the at least two offered alternatives for process modification in future selection decisions to the effect that future selection decisions are brought closer to a previously made user input.

2. The method according to claim 1, in which the at least two alternatives for process modification selected by the process control centre (42) used each provide a different strategy to at least partially remedy the determined fault.

3. The method according to claim 2, in which, for the in each case selected alternatives for process modification, the priority criterion for reducing an extent or the measurable degree of the fault to be remedied is taken into account.

4. The method according to claim 2, in which, for the in each case selected alternatives for process modification, the priority criterion for reducing a loss of time or a minor degree of process delay is taken into account.

5. The method according to claim 2, in which, for the in each case selected alternatives for process modification, the priority criterion for maintaining the continued operation of the processes, which are operated by means of the method, in handling the articles or containers (28), is taken into account.

6. The method according to one of the claims 1 to 5, in which the average duration of a fault-remedy scenario for a fault case is recorded and stored, in particular in order to optimise the sequences by a comparison of the different durations.

7. A control unit (42), which is provided and equipped to control processes associated with the handling of articles, in particular with the handling of containers (28) or groups of containers, wherein the control unit (42) takes into account at least one process parameter, that is indicative of a potential fault in at least parts of the ongoing and/or controlled process or of the ongoing and/or controlled processes,
**characterised in that**
- a process modification to at least partially remedy the fault, which process modification is specifiable by the control unit (42), is selectable by the process control centre (42) from a selection of at least two offered alternatives for process modification taking into account at least one criterion for reducing the extent or the measurable degree of the fault to be remedied,
- wherein each individual process parameter indicative of a fault and the process modifications selected and carried out in each case by the control unit (42) in order to remedy or partially remedy the fault are recorded and stored,
- wherein, for each fault that occurs and is to be remedied, the control unit (42) can take into account at least one additional criterion for reducing the extent or the measurable degree of the fault to be remedied, which additional criterion consists in a manual user input that changes or confirms the selection made by the process control centre (42) from among the at least two offered alternatives for process modification,
- and wherein any user input recorded and processed by the process control centre (42) changes the weighting between the at least two offered alternatives for process modification in future selection decisions to the effect that future selection decisions are brought closer to a previously made user input.

8. The control unit (42) according to claim 7, in which the at least two alternatives for process modification selected by the control unit (42) each provide a different strategy for at least partially remedying the detected fault.

9. The control unit (42) according to one of the claims 7 to 8, in which the average duration of a fault-remedy scenario for a fault case is recorded and stored, in particular in order to optimise the sequences by a comparison of the different durations.

## Revendications

1. Procédé (100) de commande de processus lors de la manipulation d'articles, en particulier de récipients (28) ou de groupes de récipients, dans lequel procédé au moins un paramètre de processus est déterminé qui indique une perturbation au moins de parties du processus ou des processus,
**caractérisé par le fait qu'**
- une modification de processus qui peut être spécifiée par un centre de commande de processus (42) pour remédier au moins en partie à la perturbation est sélectionnée par le centre de commande de processus (42) parmi une sélection d'au moins deux alternatives proposées pour la modification de processus, au moins en tenant compte d'un critère de réduction de l'étendue ou du degré mesurable de la perturbation à corriger,
- dans lequel, de manière séquentielle au cours du processus ou des processus, chaque paramètre de processus individuel indiquant une perturbation, ainsi que les modifications de processus sélectionnées et exécutées par le centre de commande de processus (42) pour remédier ou pour remédier en partie à la perturbation sont enregistrés et stockés,
- dans lequel, pour chaque perturbation survenant et à corriger, le centre de commande de processus (42) tient en compte au moins un critère supplémentaire de réduction de l'étendue ou du degré mesurable de la perturbation à corriger, qui consiste en une préférence utilisateur manuelle en modifiant ou en confirmant la sélection effectuée par le centre de commande de processus (42) parmi lesdites au moins deux alternatives de modification de processus proposées,
- et dans lequel toute préférence utilisateur saisie et traitée par le centre de commande de processus (42) modifie la pondération dans le cas de décisions de sélection futures parmi lesdites au moins deux alternatives de modification de processus proposées, de telle sorte que des décisions de sélection futures sont rapprochées d'une préférence utilisateur faite auparavant.

2. Procédé selon la revendication 1, dans lequel lesdites au moins deux alternatives de modification de processus sélectionnées par le centre de commande de processus (42) utilisé prévoient chacune des stratégies différentes pour remédier, au moins en partie, à la perturbation détectée.

3. Procédé selon la revendication 2, dans lequel le critère prioritaire de réduction d'une étendue ou du degré mesurable de la perturbation à corriger est pris en compte dans les alternatives de modification de processus respectivement sélectionnées.

4. Procédé selon la revendication 2, dans lequel le critère prioritaire de réduction d'une perte de temps ou d'un faible degré d'un retard de processus est pris en compte dans les alternatives de modification de processus respectivement sélectionnées.

5. Procédé selon la revendication 2, dans lequel le critère prioritaire du maintien de la continuation du fonctionnement des processus de manipulation des articles ou des récipients (28), qui sont opérés par le procédé, est pris en compte dans les alternatives de modification de processus respectivement sélectionnées.

6. Procédé selon l'une quelconque des revendications 1 à 5, dans lequel la durée moyenne d'un scénario de dépannage pour une panne donnée est enregistrée et stockée, en particulier pour optimiser les déroulements en comparant les durées différentes.

7. Unité de commande (42) qui est prévue et conçue pour commander des processus liés à la manipulation d'articles, en particulier de récipients (28) ou de groupes de récipients, dans laquelle ladite unité de commande (42) tient en compte au moins un paramètre de processus qui indique une perturbation potentielle au moins de parties du processus se déroulant et/ou commandé ou des processus se déroulant et/ou commandés,
**caractérisée par le fait qu'**
- une modification de processus qui peut être spécifiée par l'unité de commande (42) et destinée à remédier au moins en partie à la perturbation peut être sélectionnée par le centre de commande de processus (42) parmi une sélection d'au moins deux alternatives proposées pour la modification de processus, au moins en tenant compte d'un critère de réduction de l'étendue ou du degré mesurable de la perturbation à corriger,
- dans laquelle chaque paramètre de processus individuel indiquant une perturbation, ainsi que les modifications de processus sélectionnées et exécutées par l'unité de commande (42) pour remédier ou pour remédier en partie à la perturbation sont enregistrés et stockés,
- dans laquelle, pour chaque perturbation survenant et à corriger, l'unité de commande (42) peut tenir en compte au moins un critère supplémentaire de réduction de l'étendue ou du degré mesurable de la perturbation à corriger, qui consiste en une préférence utilisateur manuelle en modifiant ou en confirmant la sélection effectuée par le centre de commande de processus (42) parmi lesdites au moins deux alternatives de modification de processus proposées,
- et dans lequel toute préférence utilisateur saisie et traitée par le centre de commande de processus (42) modifie la pondération dans le cas de décisions de sélection futures parmi lesdites au moins deux alternatives de modification de processus proposées, de telle sorte que des décisions de sélection futures sont rapprochées d'une préférence utilisateur faite auparavant.

8. Unité de commande (42) selon la revendication 7, dans laquelle lesdites au moins deux alternatives de modification de processus sélectionnées par l'unité de commande (42) prévoient chacune des stratégies différentes pour corriger, au moins en partie, la perturbation détectée.

9. Unité de commande (42) selon l'une quelconque des revendications 7 à 8, dans laquelle la durée moyenne d'un scénario de dépannage pour une panne donnée est enregistrée et stockée, en particulier pour optimiser les déroulements en comparant les durées différentes.
